(19) Europäisches Patentamt / European Patent Office / Office européen des brevets

(11) **EP 4 723 222 A1**

(12) **EUROPEAN PATENT APPLICATION**
published in accordance with Art. 153(4) EPC

(43) Date of publication:
**08.04.2026 Bulletin 2026/15**

(21) Application number: **24939368.7**

(22) Date of filing: **30.08.2024**

(51) International Patent Classification (IPC):
**H01M 4/505** (2010.01)     **H01M 4/525** (2010.01)
**H01M 10/0525** (2010.01)

(52) Cooperative Patent Classification (CPC):
Y02E 60/10

(86) International application number:
**PCT/CN2024/115806**

(87) International publication number:
**WO 2025/241351 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2024 CN 202410657760**

(71) Applicant: **Contemporary Amperex Technology
Co., Limited
Ningde, Fujian 352100 (CN)**

(72) Inventors:
• **WANG, Qiqi
Ningde, Fujian 352100 (CN)**

• **ZHANG, Qiyu
Ningde, Fujian 352100 (CN)**
• **WU, Qi
Ningde, Fujian 352100 (CN)**
• **WANG, Jing
Ningde, Fujian 352100 (CN)**
• **LIU, Na
Ningde, Fujian 352100 (CN)**
• **YE, Xinde
Ningde, Fujian 352100 (CN)**

(74) Representative: **Lorenz Seidler Gossel Part. mbB
Widenmayerstr. 23
80538 München (DE)**

(54) **SECONDARY BATTERY, ELECTRIC DEVICE AND POSITIVE ELECTRODE ACTIVE MATERIAL**

(57) A secondary battery, an electric device, and a positive electrode active material are provided. The secondary battery includes a positive electrode sheet, a negative electrode sheet, a separator disposed between the positive electrode sheet and the negative electrode sheet, and an electrolytic solution including an organic solvent and a lithium salt; where the positive electrode sheet includes a positive electrode current collector and a positive electrode film layer located on at least one surface of the positive electrode current collector, the positive electrode film layer includes a positive electrode active material; the positive electrode active material includes a lithium transition metal oxide, the lithium transition metal oxide includes element nickel and element cobalt, and includes at least one of element manganese and element aluminum; in the lithium transition metal oxide, a molar content of the element nickel is 85mol% or higher based on all metal elements except lithium; and in a DTG curve obtained by heating the positive electrode active material at a heating rate of 10°C/min, an absolute value of a peak value of a thermogravimetric change rate of the positive electrode active material is less than 7%/min.

FIG. 8

EP 4 723 222 A1

**Description**

**CROSS-REFERENCE TO RELATED APPLICATIONS**

The present disclosure is based on Chinese Patent Application No. 202410657760.3, filed on May 24, 2024 and entitled "SECONDARY BATTERY, ELECTRIC DEVICE, AND POSITIVE ELECTRODE ACTIVE MATERIAL," and claims priority to this Chinese patent application. This Chinese Patent Application is incorporated herein by reference in its entirety.

**TECHNICAL FIELD**

The present disclosure relates to the field of battery technologies, and in particular to a secondary battery, an electric device, and a positive electrode active material.

**BACKGROUND**

In recent years, as the application range of secondary batteries has become increasingly broad, secondary batteries have been widely used in energy storage power systems such as hydroelectric, thermal, wind, and solar power stations, as well as in various fields such as electric tools, electric bicycles, electric motorcycles, electric automobiles, and aerospace. Due to the tremendous development of secondary batteries, higher requirements have been placed on their energy density, cycling performance, and storage performance.

The performance of a secondary battery is closely related to the positive electrode active material. High-nickel positive electrode active materials are considered the best choice to meet high energy density requirements. However, as the nickel content in the positive electrode active material increases, its thermal stability deteriorates. Therefore, how to improve the thermal stability of high-nickel positive electrode active materials and thus enhance the performance of secondary batteries is an urgent technical problem to be solved.

**SUMMARY OF THE INVENTION**

To achieve the above objective, the present disclosure provides a secondary battery, an electric device, and a positive electrode active material. The secondary battery adopts a positive electrode active material with high thermal stability, thereby having improved storage performance and cycling performance.

A first aspect of the present disclosure provides a secondary battery including: a positive electrode sheet, a negative electrode sheet, a separator disposed between the positive electrode sheet and the negative electrode sheet, and an electrolytic solution including an organic solvent and a lithium salt; where the positive electrode sheet includes a positive electrode current collector and a positive electrode film layer located on at least one surface of the positive electrode current collector, the positive electrode film layer includes a positive electrode active material; the positive electrode active material includes a lithium transition metal oxide, the lithium transition metal oxide includes element nickel and element cobalt, and includes at least one of element manganese and element aluminum; in the lithium transition metal oxide, a molar content of the element nickel is 85mol% or higher based on all metal elements except lithium; and in a differential thermogravimetric curve obtained by heating the positive electrode active material at a heating rate of 10°C/min, an absolute value of a peak value of a thermogravimetric change rate is less than 7%/min. In the present disclosure, by controlling the absolute value of the peak value of the thermogravimetric change rate less than 7%/min, a sudden drop in thermogravimetric rate can be suppressed, the thermal stability of an ultra-high nickel (Ni content of 85mol% or higher) positive electrode active material can be improved, gas generation can be reduced, and thus the storage performance and cycling performance of the battery can be enhanced. In some embodiments, the molar content of the element nickel is 90mol% or higher based on all metal elements except lithium. Controlling the molar percentage of the element nickel within the above range enables the positive electrode active material to have high energy density.

In some embodiments, the absolute value of the peak value of the thermogravimetric change rate is less than or equal to 6.1%/min. By controlling the peak value of the thermogravimetric change rate of the positive electrode active material within the above range, the thermal stability of the positive electrode active material is further improved.

In some embodiments, the absolute value of the peak value of the thermogravimetric change rate is less than or equal to 5.6%/min. By controlling the peak value of the thermogravimetric change rate of the positive electrode active material within the above range, the thermal stability of the positive electrode active material is further improved.

In some embodiments, in thermogravimetric analysis, a total weight loss of the positive electrode active material during heating from 0°C to 600°C, which accounts for a percentage of a weight of the positive electrode active material, is defined as m1, and a weight loss during heating from 220°C to 360°C, which accounts for a percentage of a weight of the positive electrode active material, is defined as m2, where m1 and m2 satisfy the following relationship: $40\% \leq m2/m1 \leq$

75%. By controlling the proportion (m2/m1) of weight loss from 220°C to 360°C in the total weight loss within the above range, the positive electrode active material exhibits less thermal weight loss in the temperature range of 220°C to 360°C, which helps to reduce accumulated heat in this temperature range and improve the thermal stability of the positive electrode active material.

In some embodiments, m2 is 0.5%-12%. By controlling m2 within the above range, the positive electrode active material exhibits less thermal weight loss in the temperature range of 220°C to 360°C, which helps to reduce accumulated heat in this temperature range and improve the thermal stability of the positive electrode active material.

In some embodiments, m1 is 1%-18%. By controlling m1 within the above range, the positive electrode active material exhibits less thermal weight loss in the temperature range of 0°C to 600°C, which helps to improve the thermal stability of the positive electrode active material.

In some embodiments, in thermogravimetric analysis, a weight loss rate of the positive electrode active material at 600°C is greater than 1% and less than 18%. In some embodiments, in thermogravimetric analysis, the weight loss rate of the positive electrode active material at 600°C is 10% to 18%. Thus, the thermal stability of the positive electrode active material can be further improved.

In some embodiments, in thermogravimetric analysis, a weight loss rate of the positive electrode active material at 300°C is 10% to 12%. Thus, the thermal stability of the positive electrode active material can be further improved.

In some embodiments, in thermogravimetric analysis, a weight loss rate of the positive electrode active material at 200°C is 0.01% to 0.5%. Thus, the thermal stability of the positive electrode active material can be further improved.

In some embodiments, the differential thermogravimetric curve is obtained by testing under a nitrogen atmosphere from 0°C to 600°C.

In some embodiments, in the differential thermogravimetric curve, a peak value of the thermogravimetric change rate appears in the range of 200°C to 280°C.

In some embodiments, in the differential thermogravimetric curve, a peak value of the thermogravimetric change rate appears in the range of 220°C to 240°C.

In some embodiments, in the differential thermogravimetric curve, a peak area of a peak of the thermogravimetric change rate is 12.0% to 17.0%.

In some embodiments, in the differential thermogravimetric curve, a full width at half maximum of the peak of the thermogravimetric change rate is 5°C to 25°C.

In some embodiments, for oxygen released from the positive electrode active material during thermogravimetric analysis, in a mass spectrum curve obtained by mass spectrometry, a peak value of a mass spectrum peak is less than or equal to $5 \times 10^{-10}$ A. The peak value of the mass spectrum peak within the above range indicates that the amount of oxygen released by the positive electrode active material is small, and the thermal stability of the positive electrode active material is further improved.

In some embodiments, in the mass spectrum curve, a peak value of the mass spectrum peak appears in the range of 200°C to 280°C. By controlling the peak value of the mass spectrum peak to satisfy the above condition, under high-temperature conditions (for example, 200°C-300°C), the amount of oxygen generated by the positive electrode active material is small, which helps to further improve the thermal stability of the positive electrode active material.

In some embodiments, in the mass spectrum curve, the peak value of the mass spectrum peak is located in the range of 220°C to 240°C. Controlling the peak value of the mass spectrum peak to satisfy the above condition helps to further improve the thermal stability of the positive electrode active material.

In some embodiments, an area of the mass spectrum peak is $1.2 \times 10^{-9}$ A·°C to $50 \times 10^{-9}$ A·°C. By controlling the peak area of the mass spectrum peak to satisfy the above condition, under high-temperature conditions (for example, 200°C-300°C), the amount of oxygen generated by the positive electrode active material is small, which helps to further improve the thermal stability of the positive electrode active material.

In some embodiments, a full width at half maximum of the mass spectrum peak is 10°C to 20°C. By controlling the full width at half maximum of the mass spectrum peak to satisfy the above condition, under high-temperature conditions (for example, 200°C-300°C), the amount of oxygen generated by the positive electrode active material is small, which helps to further improve the thermal stability of the positive electrode active material.

In some embodiments, in an X-ray diffraction pattern of the positive electrode active material, a ratio of a peak intensity I(003) of the 003 plane to a peak intensity I(104) of the 104 plane is 1.2-1.7. By controlling I(003)/I(104) within the above range, the lithium transition metal oxide in the positive electrode active material has a better layered structure, which helps to improve the thermal stability of the positive electrode active material.

In some embodiments, the lithium transition metal oxide further includes a doping element, and the doping element includes at least one of Mg, Na, Zr, Y, Al, Ca, W, Nb, Ta, Sr, and Ti. Introducing the above doping element helps to further improve the thermal stability of the positive electrode active material.

In some embodiments, a content of the doping element is 3000 ppm or less based on the lithium transition metal oxide. Controlling the content of the doping element within the above range helps to improve the gram capacity and cycling performance of the battery.

In some embodiments, the lithium transition metal oxide includes $Li_aNi_bCo_cMn_dM^1_{(1-b-c-d)}O_n$ and/or $Li_eNi_fCo_gAl_hM^2_{(1-f-g-h)}O_n$, where in $Li_aNi_bCo_cMn_dM^1_{(1-b-c-d)}O_n$, $0.5 \leq a \leq 1.2$, $0.85 \leq b \leq 0.99$, $0 \leq c \leq 0.1$, $0 \leq d \leq 0.05$, $1.9 \leq n \leq 2.2$, and $M^1$ includes one or more combinations of Mg, Na, Zr, Y, Al, Ca, W, Nb, Ta, Sr, and Ti; and in $Li_eNi_fCo_gAl_hM^2_{(1-f-g-h)}O_n$, $0.5 \leq e \leq 1.2$, $0.85 \leq f \leq 0.99$, $0 \leq g \leq 0.1$, $0 \leq h \leq 0.05$, $1.9 \leq n \leq 2.2$, and $M^2$ includes one or more combinations of Mg, Na, Zr, Y, Ca, W, Nb, Ta, Sr, and Ti.

In some embodiments, the positive electrode active material satisfies at least one of the following conditions: (1) a volume average particle size Dv50 of the positive electrode active material is 8.5 $\mu$m to 12 $\mu$m; (2) a specific surface area BET of the positive electrode active material is 0.35 $m^2/g$ to 0.65 $m^2/g$; (3) a powder compacted density of the positive electrode active material under a pressure of 3000 N is 3.0 $g/cm^3$ to 3.5 $g/cm^3$; (4) a tap density of the positive electrode active material is 2.9 $g/cm^3$ to 3.5 $g/cm^3$; and (5) a delithiated gram capacity of the positive electrode active material is 210 mAh/g to 225 mAh/g.

In some embodiments, the positive electrode active material includes a matrix and a coating layer disposed on at least part of a surface of the matrix; where the matrix includes the lithium transition metal oxide. The coating layer is applied to the surface of the lithium transition metal oxide, which can reduce side reactions between the lithium transition metal oxide and the electrolytic solution, thereby enhancing the thermal stability of the positive electrode active material.

In some embodiments, the coating layer includes an outer layer and an inner layer disposed between the outer layer and the matrix; where the inner layer includes at least one element of P, Al, Ca, and Ti; and the outer layer includes at least one element of Y and Al. By providing inner and outer coating layers, the structural stability of the coating layer can be improved, the probability of side reactions between the electrolytic solution and the lithium transition metal oxide can be reduced, and thus the thermal stability of the positive electrode active material can be further enhanced.

In some embodiments, the inner layer includes element P, and the outer layer includes element Y and element Al. A coating containing element phosphorus (phosphate) can improve the ion-conducting ability on the surface of the positive electrode active material while reducing contact with the electrolytic solution, which helps to further enhance the thermal stability of the positive electrode active material.

In some embodiments, in the positive electrode active material, a molar ratio of element lithium to element phosphorus is 1:0.001-0.004. By controlling the molar ratio of element lithium to element phosphorus within the above range, phosphate can better form a coating layer with an appropriate thickness on the surface of the matrix, which can effectively protect the surface-interface stability of the positive electrode active material, enhance the stability of the positive electrode active material, and minimize the impact of the coating on ion transport.

A second aspect of the present disclosure provides an electric device including the secondary battery according to the first aspect.

A third aspect of the present disclosure provides a positive electrode active material including a lithium transition metal oxide, where the lithium transition metal oxide includes element nickel and element cobalt, and includes at least one of element manganese and element aluminum; in the lithium transition metal oxide, a molar content of the element nickel is 85mol% or higher based on all metal elements except lithium; and in a differential thermogravimetric curve obtained by heating the positive electrode active material at a heating rate of 10°C/min, an absolute value of a peak value of a thermogravimetric change rate is less than 7%/min. The positive electrode active material of the present disclosure can suppress a sudden drop in thermogravimetric rate, has excellent thermal stability, reduces the occurrence of gas generation, and can improve the storage performance and cycling performance of the battery.

In some embodiments, the molar content of the element nickel is 90mol% or higher based on all metal elements except lithium. Controlling the molar percentage of the element nickel within the above range enables the positive electrode active material to have high energy density.

In some embodiments, the absolute value of the peak value of the thermogravimetric change rate is less than or equal to 6.1%/min. By controlling the peak value of the thermogravimetric change rate of the positive electrode active material within the above range, the thermal stability of the positive electrode active material is further improved.

In some embodiments, the absolute value of the peak value of the thermogravimetric change rate is less than or equal to 5.6%/min. By controlling the peak value of the thermogravimetric change rate of the positive electrode active material within the above range, the thermal stability of the positive electrode active material is further improved.

In some embodiments, in thermogravimetric analysis, a total weight loss of the positive electrode active material during heating from 0°C to 600°C, which accounts for a percentage of a weight of the positive electrode active material, is defined as m1, and a weight loss during heating from 220°C to 360°C, which accounts for a percentage of a weight of the positive electrode active material, is defined as m2, where m1 and m2 satisfy the following relationship: 40% $\leq$ m2/ml $\leq$ 75%.

In some embodiments, m2 is 0.5%-12%. Thus, the positive electrode active material exhibits less thermal weight loss in the temperature range of 220°C to 360°C, which helps to reduce accumulated heat in this temperature range and improve the thermal stability of the positive electrode active material. In some embodiments, m1 is 1% to 18%. Thus, the positive electrode active material exhibits less thermal weight loss in the temperature range of 0°C to 600°C, which helps to improve the thermal stability of the positive electrode active material.

In some embodiments, in thermogravimetric analysis, a weight loss rate of the positive electrode active material at 600°C is greater than 1% and less than 18%. Thus, the thermal stability of the positive electrode active material can be further improved.

In some embodiments, in thermogravimetric analysis, a weight loss rate of the positive electrode active material at 300°C is 10%-12%. Thus, the thermal stability of the positive electrode active material can be further improved.

In some embodiments, in thermogravimetric analysis, a weight loss rate of the positive electrode active material at 200°C is 0.01%-0.5%. Thus, the thermal stability of the positive electrode active material can be further improved.

## DESCRIPTION OF DRAWINGS

FIG. 1 is a schematic diagram of a battery cell according to an embodiment of the present disclosure.

FIG. 2 is an exploded view of the battery cell according to an embodiment of the present disclosure shown in FIG. 1.

FIG. 3 is a schematic diagram of a battery module according to an embodiment of the present disclosure.

FIG. 4 is a schematic diagram of a battery pack according to an embodiment of the present disclosure.

FIG. 5 is an exploded view of the battery pack according to an embodiment of the present disclosure shown in FIG. 4.

FIG. 6 is a schematic diagram of an electric device using a secondary battery as a power source according to an embodiment of the present disclosure.

FIG. 7 shows a thermogravimetric-temperature curve of a positive electrode active material prepared in Example 1 of the present disclosure.

FIG. 8 shows a thermogravimetric change rate-temperature curve of the positive electrode active material prepared in Example 1 of the present disclosure.

FIG. 9 shows a mass spectrum of the positive electrode active material prepared in Example 1 of the present disclosure.

Reference signs:

1. battery pack; 2. upper box body; 3. lower box body; 4. battery module; 5. battery cell; 51. housing; 52. electrode assembly; and 53. top cover assembly.

## DETAILED DESCRIPTION

Hereinafter, embodiments specifically disclosing the secondary battery, electric device, and positive electrode active material of the present disclosure will be described in detail with appropriate reference to the accompanying drawings. However, unnecessary detailed descriptions may be omitted. For example, detailed descriptions of well-known matters and repeated descriptions of substantially identical structures may be omitted. This is to avoid unnecessary redundancy in the following description and to facilitate understanding by those skilled in the art. In addition, the drawings and the following description are provided for those skilled in the art to fully understand the present disclosure and are not intended to limit the subject matter recited in the claims.

The "range" disclosed in the present disclosure is defined in the form of lower and upper limits. A given range is defined by selecting a lower limit and an upper limit, and the selected lower and upper limits define the boundaries of the particular range. Ranges defined in this manner may or may not include endpoints and may be arbitrarily combined, i.e., any lower limit may be combined with any upper limit to form a range. For example, if ranges of 60-120 and 80-110 are listed for a particular parameter, it is understood that ranges of 60-110 and 80-120 are also contemplated. Additionally, if minimum range values of 1 and 2 are listed, and if maximum range values of 3, 4, and 5 are listed, the following ranges are all contemplated: 1-3, 1-4, 1-5, 2-3, 2-4, and 2-5. In the present disclosure, unless otherwise stated, the numerical range "a-b" represents an abbreviated representation of any real number combination between a and b, where a and b are both real numbers. For example, the numerical range "0-5" indicates that all real numbers between "0-5" inclusive have been listed herein, and "0-5" is merely an abbreviated representation of these numerical combinations. In addition, when a parameter is expressed as an integer $\geq 2$, it is equivalent to disclosing that the parameter is, for example, the integer 2, 3, 4, 5, 6, 7, 8, 9, 10, 11, 12, or the like.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, the terms used in the present disclosure have the well-known meanings commonly understood by those skilled in the art.

Unless otherwise specified, the numerical values of parameters mentioned in the present disclosure can be measured by various testing methods commonly used in the art, for example, by the testing methods provided in the present disclosure.

The performance of a secondary battery is closely related to the thermal stability of the positive electrode active material. In current positive electrode active material designs, high-nickel positive electrode active materials are typically used to obtain higher energy density. However, during battery operation, high internal temperatures cause phase transitions in the above materials, leading to reduction of transition metal ions (for example, $Ni^{4+}$, $Ni^{3+}$, $Co^{4+}$, $Co^{3+}$) and generation of gases (for example, oxygen). Higher nickel content accelerates the rate of the above phase transitions. In particular, ultra-high nickel positive electrode active materials (especially those with Ni content of 85mol% or higher) have poorer thermal stability than low-nickel materials, and are more prone to decomposition and severe gas generation at high temperatures, which affect the cycling performance and storage performance of the battery.

Based on this, the present disclosure proposes a secondary battery and an electric device. The present invention and optional embodiments will be described in more detail below.

A first aspect of the present disclosure provides a secondary battery. The secondary battery includes a positive electrode sheet, a negative electrode sheet, a separator disposed between the positive electrode sheet and the negative electrode sheet, and an electrolytic solution including an organic solvent and a lithium salt; where the positive electrode sheet includes a positive electrode current collector and a positive electrode film layer located on at least one surface of the positive electrode current collector, the positive electrode film layer includes a positive electrode active material; the positive electrode active material includes a lithium transition metal oxide, the lithium transition metal oxide includes element nickel and element cobalt, and includes at least one of element manganese and element aluminum; in the lithium transition metal oxide, a molar content of the element nickel is 85mol% or higher based on all metal elements except lithium; and in a differential thermogravimetric curve obtained by heating the positive electrode active material at a heating rate of 10°C/min, an absolute value of a peak value of a thermogravimetric change rate of the positive electrode active material is less than 7%/min.

In the present disclosure, by controlling the absolute value of the peak value of the thermogravimetric change rate less than 7%/min, a sudden drop in thermogravimetric rate can be suppressed, the thermal stability of an ultra-high nickel (Ni content of 85mol% or higher) positive electrode active material can be improved, gas generation can be reduced, and thus the storage performance and cycling performance of the battery can be enhanced.

In the present disclosure, in the lithium transition metal oxide, the molar percentage of the element nickel is 85mol% or higher based on all metal elements except lithium. For example, the molar percentage of the element nickel may be 85mol%, 86mol%, 90mol%, 91mol%, 92mol%, 93mol%, 94mol%, 95mol%, 96mol%, 97mol%, 98mol%, or a value defined by any two of the above numerical values, but is not limited thereto. Preferably, the molar percentage of the element nickel is 90mol% or higher. Controlling the molar percentage of the element nickel within the above range enables the positive electrode active material to have high energy density.

In the present disclosure, thermogravimetric analysis of the positive electrode active material may be performed, for example, as follows: 10 mg to 20 mg of a positive electrode active material sample powder is taken, dried to remove moisture, and placed in a thermogravimetric analysis crucible; the test temperature range is set to 0°C-600°C, the heating rate is set to 10°C/min, and the sample is placed in a thermogravimetric analyzer for testing to obtain a thermogravimetric analysis curve (TG curve). Then, each point on the TG curve is first-order differentiated with respect to the time coordinate to obtain a differential thermogravimetric curve (DTG curve). The DTG curve shows the change in thermogravimetric change rate over time, and a lower thermogravimetric change rate indicates better thermal stability of the positive electrode active material.

In the present disclosure, the thermogravimetric change rate of the positive electrode active material in the DTG curve exhibits an inverted peak, and the absolute value of the peak value is less than 7%/min. For example, the peak value of the thermogravimetric change rate of the positive electrode active material may be -6.9%/min, -6.8%/min, - 6.5%/min, -6.3%/min, -6.2%/min, -6.1%/min, -6%/min, -5.6%/min, -5%/min, -4%/min, -3%/min, -2%/min, -1%/min, or a value defined by any two of the above numerical values. Preferably, the absolute value of the peak value of the thermogravimetric change rate is 6.1%/min or less, and further preferably, the absolute value of the peak value of the thermogravimetric change rate is 5.6%/min or less. By controlling the peak value of the thermogravimetric change rate of the positive electrode active material within the above range, the thermal stability of the positive electrode active material is further improved.

In some embodiments, the DTG curve is obtained by testing under a nitrogen atmosphere from 0°C to 600°C. In some embodiments, in the DTG curve, a peak value of the thermogravimetric change rate appears in the range of 200°C to 280°C, for example, the peak value appears at 200°C, 210°C, 220°C, 230°C, 240°C, or a value defined by any two of the above numerical values. Preferably, the peak value appears in the range of 220°C to 240°C.

In some embodiments, a peak area of a peak of the thermogravimetric change rate is 12.0% to 17.0%. For example, the peak area of the peak of the thermogravimetric change rate may be 12.0%, 13.0%, 14.0%, 15.0%, 16.0%, 17.0%, or a value defined by any two of the above numerical values.

In some embodiments, a full width at half maximum of the peak of the thermogravimetric change rate is 5°C to 25°C. For example, the full width at half maximum of the peak of the thermogravimetric change rate may be 5°C, 10°C, 15°C, 20°C, 25°C, or a value defined by any two of the above numerical values.

In some embodiments, a total weight loss of the positive electrode active material during heating from 0°C to 600°C, which accounts for a percentage of a weight of the positive electrode active material, is defined as m1, and a weight loss during heating from 220°C to 360°C, which accounts for a percentage of a weight of the positive electrode active material, is defined as m2, where m1 and m2 satisfy the following relationship: $40\% \leq m2/m1 \leq 75\%$. For example, m2/m1 may be 40%, 45%, 50%, 55%, 60%, 65%, 70%, 75%, or a value defined by any two of the above numerical values.

Studies have found that side reactions of the positive electrode active material mainly occur in the temperature range of 220°C to 360°C, and in this temperature range, most thermal weight loss occurs, with a significant weight drop and increased weight loss. In the present disclosure, by controlling the proportion of weight loss from 220°C to 360°C in the total weight loss (m2/m1) 40%-75%, the positive electrode active material exhibits less thermal weight loss in the temperature range of 220°C to 360°C, which helps to reduce accumulated heat in this temperature range and improve the thermal stability of the positive electrode active material. In some embodiments, preferably, m1 and m2 satisfy the following relationship: $40\% \leq m2/ml \leq 55\%$, thereby helping to further improve the thermal stability of the positive electrode active material.

In some embodiments, m1 is greater than 1% and less than 18%, for example, m1 may be 3%, 6%, 9%, 12%, 15%, 16.87%, 18%, or a value defined by any two of the above numerical values. By controlling m1 within the above range, the positive electrode active material exhibits less thermal weight loss in the temperature range of 0°C to 600°C, which helps to improve the thermal stability of the positive electrode active material.

In some embodiments, m2 is 0.5% to 12%, for example, m2 may be 0.5%, 1%, 3%, 6%, 9%, 10.95%, 12%, or a value defined by any two of the above numerical values. By controlling m2 within the above range, the positive electrode active material exhibits less thermal weight loss in the temperature range of 220°C to 360°C, which helps to reduce accumulated heat in this temperature range and improve the thermal stability of the positive electrode active material.

In some embodiments, in thermogravimetric analysis, a weight loss rate of the positive electrode active material at 600°C is greater than 1% and less than 18%. For example, the weight loss rate of the positive electrode active material at 600°C may be 10%, 11%, 12%, 13%, 14%, 15%, 16%, 17%, 18%, or a value defined by any two of the above numerical values. Preferably, the weight loss rate of the positive electrode active material at 600°C is 10% to 18%.

In some embodiments, in thermogravimetric analysis, a weight loss rate of the positive electrode active material at 300°C is 10% to 12%. For example, the weight loss rate of the positive electrode active material at 300°C may be 10%, 11%, 12%, or a value defined by any two of the above numerical values.

In some embodiments, in thermogravimetric analysis, a weight loss rate of the positive electrode active material at 200°C is 0.01% to 0.5%. For example, the weight loss rate of the positive electrode active material at 200°C may be 0.01%, 0.1%, 0.2%, 0.3%, 0.4%, 0.5%, or a value defined by any two of the above numerical values.

In some embodiments, for oxygen released from the positive electrode active material during thermogravimetric analysis, in a mass spectrum curve obtained by mass spectrometry, a peak value (maximum ion current intensity) of a mass spectrum peak is less than or equal to $5 \times 10^{-10}$ A (amperes), where the mass spectrum curve is a mapping relationship between ion current intensity (Ion$^{Current}$) and temperature, and the ion current is an ion current generated by oxygen released from the positive electrode active material during mass spectrometry. A smaller peak value (Ion$^{Current}$) indicates less oxygen released from the positive electrode active material at the current temperature and better thermal stability of the positive electrode active material. The peak value of the mass spectrum peak within the above range indicates that the amount of oxygen released by the positive electrode active material is small, and the thermal stability of the positive electrode active material is further improved.

In some embodiments, in the mass spectrum curve, a peak value of the mass spectrum peak appears in the range of 200°C to 280°C. In some embodiments, the peak value of the mass spectrum peak appears in the range of 220°C to 240°C. For example, the peak value of the mass spectrum peak may appear at 200°C, 210°C, 220°C, 230°C, 240°C, 250°C, 260°C, 270°C, 280°C, or a value defined by any two of the above numerical values. By controlling the peak value of the mass spectrum peak to satisfy the above condition, under high-temperature conditions (for example, 200°C-300°C), the amount of oxygen generated by the positive electrode active material is small, which helps to further improve the thermal stability of the positive electrode active material.

In some embodiments, an area of the mass spectrum peak is $1.2 \times 10^{-9}$ A·°C to $50 \times 10^{-9}$ A·°C. For example, the area of the mass spectrum peak may be $1.2 \times 10^{-9}$ A·°C, $10 \times 10^{-9}$ A·°C, $20 \times 10^{-9}$ A·°C, $30 \times 10^{-9}$ A·°C, $40 \times 10^{-9}$ A·°C, $50 \times 10^{-9}$ A·°C, or a value defined by any two of the above numerical values. By controlling the peak area of the mass spectrum peak to satisfy the above condition, under high-temperature conditions (for example, 200°C-300°C), the amount of oxygen generated by the positive electrode active material is small, which helps to further improve the thermal stability of the positive electrode active material.

In some embodiments, a full width at half maximum of the mass spectrum peak is 10°C to 20°C. For example, the full width at half maximum of the mass spectrum peak may be 10°C, 12°C, 14°C, 16°C, 18°C, 20°C, or a value defined by any two of the above numerical values. By controlling the full width at half maximum of the mass spectrum peak to satisfy the above condition, under high-temperature conditions (for example, 200°C-300°C), the amount of oxygen generated by the positive electrode active material is small, which helps to further improve the thermal stability of the positive electrode active material.

In some embodiments, in an X-ray diffraction pattern of the positive electrode active material, a ratio of a peak intensity I(003) of the 003 plane to a peak intensity I(104) of the 104 plane is 1.2-1.7. For example, I(003)/I(104) may be 1.2, 1.3, 1.4, 1.5, 1.6, 1.7, or a value defined by any two of the above numerical values. By controlling I(003)/I(104) within the above range, the lithium transition metal oxide in the positive electrode active material has a better layered structure, which helps to improve the thermal stability of the positive electrode active material.

In some embodiments, the lithium transition metal oxide further includes a doping element, and the doping element includes at least one of Mg, Na, Zr, Y, Al, Ca, W, Nb, Ta, Sr, and Ti. Introducing the above doping element helps to further improve the thermal stability of the positive electrode active material.

In some embodiments, a content of the above doping element is less than or equal to 3000 ppm relative to the lithium transition metal oxide. For example, the content of the doping element may be 3000 ppm, 2000 ppm, 1000 ppm, 500 ppm, 200 ppm, 100 ppm, 0 ppm, or a value defined by any two of the above numerical values, but is not limited thereto. Controlling the content of the doping element within the above range helps to improve the gram capacity and cycling performance of the battery.

In the present disclosure, "lithium transition metal oxide" refers to an oxide containing lithium metal and transition metal elements. The lithium transition metal oxides mentioned in the present disclosure include, but are not limited to, lithium nickel cobalt manganese oxide (NCM), and lithium nickel cobalt aluminum oxide (NCA).

In some embodiments, the chemical formula of the above lithium nickel cobalt manganese oxide is $Li_aNi_3Co_cMn_dM^1{}_{(1-b-c-d)}O_n$, where $0.5 \le a \le 1.2$, $0.85 \le b \le 0.99$, $0 \le c \le 0.1$, $0 \le d \le 0.05$, $1.9 \le n \le 2.2$, and $M^1$ includes one or more combinations of Mg, Na, Zr, Y, Al, Ca, W, Nb, Ta, Sr, and Ti.

In some embodiments, the chemical formula of the above lithium nickel cobalt aluminum oxide is $Li_eNi_fCo_gAl_hM^2{}_{(1-f-g-h)}O_n$, where $0.5 \le e \le 1.2$, $0.85 \le f \le 0.99$, $0 \le g \le 0.1$, $0 \le h \le 0.05$, $1.9 \le n \le 2.2$, and $M^2$ includes one or more combinations of Mg, Na, Zr, Y, Ca, W, Nb, Ta, Sr, and Ti.

For example, the lithium transition metal oxide includes $Li(Ni_{0.93}Co_{0.06}Mn_{0.01})_{0.991}W_{0.004}Zr_{0.005}O_2$, $Li(Ni_{0.93}Co_{0.06}Mn_{0.01})_{0.994}Ta_{0.001}Zr_{0.005}O_2$, or the like.

In some embodiments, the positive electrode active material satisfies at least one of the following conditions: (1) a volume average particle size Dv50 of the positive electrode active material is 8.5 $\mu$m to 12 $\mu$m; (2) a specific surface area BET of the positive electrode active material is 0.35 $m^2$/g to 0.65 $m^2$/g; (3) a powder compacted density of the positive electrode active material under a pressure of 3000 N is 3.0 $g/cm^3$ to 3.5 $g/cm^3$; (4) a tap density of the positive electrode active material is 2.9 $g/cm^3$ to 3.5 $g/cm^3$; and (5) a delithiated gram capacity of the positive electrode active material is 210 mAh/g to 225 mAh/g.

In the present disclosure, the volume distribution particle size Dv50 of a material has the well-known meaning in the art, indicating the particle size corresponding to 50% of the cumulative volume distribution percentage of the material, and can be measured using instruments and methods known in the art. For example, reference may be made to GB/T 19077-2016, and measurement may be performed using a laser particle size analyzer. The test instrument may be a Mastersizer 3000 laser particle size analyzer from Malvern Instruments Ltd., UK.

In the present disclosure, the specific surface area of a material has the well-known meaning in the art and can be measured using instruments and methods known in the art. For example, reference may be made to GB/T 19587-2017, the specific surface area may be tested by a nitrogen adsorption specific surface area analysis test method, and calculated by the BET (Brunauer Emmett Teller) method. The test instrument may be a Tri-Star 3020 specific surface area and pore size analyzer from Micromeritics, USA.

In the present disclosure, the powder compacted density of a material has the well-known meaning in the art and can be measured using instruments and methods known in the art. For example, reference may be made to GB/T 24533-2009, and measurement may be performed by an electronic pressure testing machine (for example, a UTM7305 electronic pressure testing machine). An exemplary test method is as follows: 1 g of sample powder is weighed and added to a mold with a bottom area of 1.327 $cm^2$, pressurized to 3000 N, held for 30s, then depressurized, held for 10s, and then recorded and calculated to obtain the powder compacted density of the material under 3000 N pressure.

In the present disclosure, the tap density of a material has the well-known meaning in the art and can be measured using instruments and methods known in the art. For example, reference may be made to GB/T 5162-2006, and measurement may be performed using a powder tap density tester. The test instrument may be a BT-301 from Dandong Bettersize, with test parameters as follows: vibration frequency 250 $\pm$ 15 times/min, amplitude 3 $\pm$ 0.2 mm, vibration times 5000, and graduated cylinder 25 mL.

In the present disclosure, the delithiated gram capacity of a material has the well-known meaning in the art and can be tested by methods known in the art.

In some embodiments, the positive electrode active material includes a matrix and a coating layer disposed on at least part of a surface of the matrix, where the matrix includes the lithium transition metal oxide. In this embodiment, the coating layer is applied to the surface of the lithium transition metal oxide, which can reduce side reactions between the lithium transition metal oxide and the electrolytic solution, thereby enhancing the thermal stability of the positive electrode active material.

In some embodiments, the coating layer includes an outer layer and an inner layer disposed between the outer layer and the matrix; where the inner layer includes at least one element of element phosphorus, element aluminum, element calcium, and element titanium; and the outer layer includes at least one element of Y and Al. By providing inner and outer coating layers, the structural stability of the coating layer can be improved, the probability of side reactions between the electrolytic solution and the lithium transition metal oxide can be reduced, and thus the thermal stability of the positive electrode active material can be further enhanced.

In some embodiments, the inner layer includes element P, and the outer layer includes element Y and element Al. A coating containing element phosphorus (phosphate) can improve the ion-conducting ability on the surface of the positive electrode active material while reducing contact with the electrolytic solution, which helps to further enhance the thermal stability of the positive electrode active material.

In some embodiments, in the positive electrode active material, a molar ratio of element lithium to element phosphorus is 1:0.001-0.004. For example, the molar ratio of element lithium to element phosphorus may be 1:0.001, 1:0.002, 1:0.003, 1:0.004, or a value defined by any two of the above numerical values, but is not limited thereto. By controlling the molar ratio of element lithium to element phosphorus within the above range, phosphate can better form a coating layer with an appropriate thickness on the surface of the matrix, which can effectively protect the surface-interface stability of the positive electrode active material, enhance the stability of the positive electrode active material, and minimize the impact of the coating on ion transport.

In addition, for the preparation method of the positive electrode active material of the present disclosure, for example, the following method may be used, including the following steps.

Step (1): A mixed solution including element Ni, element Co, and element Mn is prepared by mixing in a molar ratio of Ni, Co, and Mn of x:y:(1-x-y), where $x \geq 0.85$. Under a certain pump speed, the mixed solution, sodium carbonate, and ammonia water are added to a reactor, the pH in the reactor is controlled between 11 and 14, the temperature is controlled between 50°C and 70°C, and a coprecipitation reaction is performed so that precursor particles grow to a target Dv50 = 8.5 $\mu$m-12 $\mu$m. After the reaction is completed, washing and drying are performed to obtain an ultra-high nickel ternary material precursor.

In the present disclosure, substances capable of providing element Ni include, but are not limited to, nickel carbonate, nickel hydroxide, nickel acetate, nickel sulfate, nickel chloride, nickel nitrate, and nickel oxalate.

In the present disclosure, substances capable of providing element Co include, but are not limited to, cobalt carbonate, cobalt hydroxide, cobalt acetate, cobalt sulfate, cobalt chloride, cobalt nitrate, and cobalt oxalate.

In the present disclosure, substances capable of providing Mn element include, but are not limited to, manganese dioxide, electrolytic manganese dioxide, and trimanganese tetroxide.

In the above coprecipitation reaction, the reaction temperature may be 50°C-70°C, for example, the reaction temperature may be 50°C, 55°C, 60°C, 65°C, 70°C, or a value defined by any two of the above numerical values. The reaction time is 24 h-48 h. For example, the reaction time may be 24 h, 28 h, 32 h, 36 h, 40 h, 44 h, 48 h, or a value defined by any two of the above numerical values.

The above coprecipitation reaction is performed in an environment with pH 11-14, for example, the pH of the reaction environment may be 11, 12, 13, 14, or a value defined by any two of the above numerical values, but is not limited thereto.

Step (2): The ultra-high nickel ternary material precursor obtained in step (1), a lithium source, and a doping element M source are mixed to obtain a mixture, which is sintered at high temperature to obtain a lithium transition metal oxide.

In some embodiments, the lithium source is a substance capable of providing element lithium, for example, the lithium source includes at least one of lithium hydroxide (LiOH·H$_2$O), lithium carbonate (Li$_2$CO$_3$), lithium sulfate (Li$_2$SO$_4$), lithium nitrate (LiNO$_3$), lithium oxalate (LiC$_2$O$_4$), and lithium acetate (CH$_3$COOLi), but is not limited thereto. A metal molar ratio Li/Me of the above lithium source to the above ternary material precursor is 1.0-1.2:1, where Me is the total molar amount of elements Ni, Co, and Mn.

In some embodiments, the doping element M includes one or more of Mg, Na, Zr, Y, Al, Ca, W, Nb, Ta, Sr, and Ti. In some embodiments, the doping element M source may be any substance capable of providing the above doping element M, without particular limitation. For example, it may be sodium carbonate, zirconium hydroxide, zirconium oxide, zirconium carbonate, magnesium oxide, magnesium hydroxide, magnesium carbonate, titanium oxide, titanium hydroxide, titanium carbonate, tungsten oxide, tungsten hydroxide, tungsten carbonate, niobium oxide, niobium hydroxide, niobium carbonate, tantalum hydroxide, tantalum carbonate, strontium hydroxide, strontium oxide, strontium carbonate, strontium phosphate, calcium hydroxide, calcium oxide, calcium carbonate, calcium phosphate, aluminum oxide, aluminum hydroxide, yttrium oxide, yttrium hydroxide, or the like.

In some embodiments, the sintering temperature and sintering time of the above sintering are not particularly limited. For example, the sintering temperature may be 500°C-800°C. Specifically, it may be 500°C, 550°C, 600°C, 650°C, 700°C, 720°C, 800°C, or a value defined by any two of the above numerical values, preferably 720°C. The sintering time may be 5 h-16 h, for example, 5 h, 6 h, 7 h, 8 h, 9 h, 10 h, 11 h, 12 h, 13 h, 14 h, 15 h, 16 h, or a value defined by any two of the above numerical values, preferably 14 h.

Step (3): The lithium transition metal oxide obtained in step (2) is mixed with phosphate, the resulting mixture is sintered at a sintering temperature of 400-650°C for 5 h-11 h.

Preferably, the phosphate includes $Li_xAl_{0.5}Ti_{1.5}(PO_4)_3$, where x = 1.5-5. For example, x may be 1.5, 2, 3, 4, 5, or a value defined by any two of the above numerical values, but is not limited thereto. Further preferably, it includes $LiAl_{0.5}Ti_{1.5}(PO_4)_3$. Coating with phosphate can improve the ion-conducting ability on the surface of the positive electrode active material while reducing contact with the electrolytic solution, which helps to further enhance the thermal stability of the positive electrode active material. In the material obtained after this sintering, a molar ratio of element lithium to element phosphorus is 1:0.001-0.004. For example, it may be 1:0.001, 1:0.002, 1:0.003, 1:0.004, or a value defined by any two of the above numerical values, but is not limited thereto.

In this step, the sintering temperature is 400°C-650°C. For example, it may be 400°C, 450°C, 500°C, 550°C, 600°C, 650°C, or a value defined by any two of the above numerical values, preferably 600°C. The sintering time is 5 h-11 h, for example, 5 h, 5.5 h, 6 h, 6.5 h, 7 h, 7.5 h, 8 h, 8.5 h, 9 h, 9.5 h, 10 h, 10.5 h, 11 h, or a value defined by any two of the above numerical values, preferably 6.5 hours.

Step (4): The product obtained in the above step (3) is added to pure water, and the resulting mixture is stirred for 3 min-5 min, filtered, and dried.

Step (5): The substance obtained in the above step (4) is mixed with an Al source and a Y source, and the resulting mixture is sintered at high temperature to obtain the positive electrode active material of the present disclosure.

In the present disclosure, the aluminum source is a substance capable of providing element aluminum, for example, the aluminum source may include at least one of aluminum oxide and aluminum hydroxide. The yttrium source is a substance capable of providing yttrium element, for example, the yttrium source may include at least one of yttrium oxide and yttrium hydroxide.

In some embodiments, a molar ratio of the substance obtained in the above step (4) to element Al and element Y is 1:0.005-0.01:0.005-0.01, for example, the molar ratio may be 1:0.005:0.005, 1:0.01:0.005, 1:0.005:0.01, or a value defined by any two of the above numerical values. In some embodiments, a component of the inner layer of the coating layer close to the matrix includes $Li_xAl_{0.5}Ti_{1.5}(PO_4)_3$, where x is 1.5-5. The outer layer of the coating layer away from the matrix includes at least one of element Al and element Y. Preferably, the outer layer of the coating layer away from the matrix includes $Al_{18}Y_{14}O_{48}$.

In this step, the sintering temperature may be 250°C-400°C, for example, 250°C, 300°C, 350°C, 400°C, or a value defined by any two of the above numerical values, preferably 300°C. The sintering time may be 5 h-12 h, for example, 5 h, 5.5 h, 6 h, 6.5 h, 7 h, 7.5 h, 8 h, 8.5 h, 9 h, 9.5 h, 10 h, 10.5 h, 11 h, 11.5 h, 12 h, or a value defined by any two of the above numerical values, but is not limited thereto. Preferably, it may be 6 h-10 h, more preferably 8 h.

It should be noted that the chemical formulas of the lithium transition metal oxides given in the present disclosure are the chemical formulas of the materials used in the battery preparation process. In the positive electrode sheet, secondary battery, and electric device, due to processes such as formation and cycling, those skilled in the art can understand that the elements in the above chemical formulas may be lost. For example, in the positive electrode sheet, secondary battery, and electric device, due to cycling and other processes, element oxygen in the positive electrode active material is lost, so the measured content of element oxygen in the positive electrode active material may be reduced. In addition, due to formation and cycling processes, lithium ions are consumed, so the measured content of element lithium in the positive electrode active material may be reduced.

In addition, the secondary battery and electric device of the present disclosure will be appropriately described below with reference to the accompanying drawings.

The term "secondary battery" mentioned herein refers to a battery cell, a battery module, or a battery pack. The following will be described separately.

Generally, a secondary battery cell includes a positive electrode sheet, a negative electrode sheet, an electrolyte, and a separator. During charging and discharging of the battery, active ions are intercalated and deintercalated back and forth between the positive electrode sheet and the negative electrode sheet. The electrolyte serves to conduct ions between the positive electrode sheet and the negative electrode sheet. The separator is disposed between the positive electrode sheet and the negative electrode sheet, mainly to prevent short circuit between the positive and negative electrodes while allowing ions to pass through.

Positive electrode sheet

The positive electrode sheet includes a positive electrode current collector and a positive electrode film layer disposed on at least one surface of the positive electrode current collector, and the positive electrode film layer includes the positive electrode active material of the present disclosure.

In some embodiments, the positive electrode current collector has two surfaces opposite in its own thickness direction, and the positive electrode film layer is disposed on either or both of the two opposite surfaces of the positive electrode current collector.

In some embodiments, the positive electrode current collector may be a metal foil or a composite current collector. For example, as the metal foil, aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (a substrate such as polypropylene (PP), polyethylene terephthalate (PET), polybutylene terephthalate (PBT), polystyrene (PS), or polyethylene (PE)).

In some embodiments, the positive electrode film layer may optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer may optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared as follows: the above components for preparing the positive electrode sheet, such as the positive electrode active material, the conductive agent, the binder, and any other components, are dispersed in a solvent (for example, N-methylpyrrolidone) to prepare a positive electrode slurry; the positive electrode slurry is applied on the positive electrode current collector, and after processes such as drying and cold pressing, the positive electrode sheet can be obtained.

Negative electrode sheet

The negative electrode sheet includes a negative electrode current collector and a negative electrode film layer disposed on at least one surface of the negative electrode current collector, and the negative electrode film layer includes a negative electrode active material.

As an example, the negative electrode current collector has two surfaces opposite in its own thickness direction, and the negative electrode film layer is disposed on either or both of the two opposite surfaces of the negative electrode current collector.

In some embodiments, the negative electrode current collector may be a metal foil or a composite current collector. For example, as the metal foil, copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (a substrate such as polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. As an example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present disclosure is not limited to these materials, and other conventional materials that can be used as negative electrode active materials for batteries may also be used. These negative electrode active materials may be used alone or in combination of two or more.

In some embodiments, the negative electrode film layer may optionally include a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally include a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may optionally include other auxiliaries, such as a thickener (for example, sodium carboxymethyl cellulose (CMC-Na)).

In some embodiments, the negative electrode sheet may be prepared as follows: the above components for preparing the negative electrode sheet, such as the negative electrode active material, the conductive agent, the binder, and any other components, are dispersed in a solvent (for example, deionized water) to prepare a negative electrode slurry; the negative electrode slurry is applied on the negative electrode current collector, and after processes such as drying and cold pressing, the negative electrode sheet can be obtained.

Electrolyte

The electrolyte serves to conduct ions between the positive electrode sheet and the negative electrode sheet. The type of the electrolyte is not specifically limited in the present disclosure and may be selected as needed.

In some embodiments, the electrolyte is an electrolytic solution. The electrolytic solution includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte may optionally include an additive. For example, the additive may include a negative electrode film-forming additive and a positive electrode film-forming additive, and may also include an additive capable of improving certain performances of the battery, such as an additive for improving overcharge performance of the battery or an additive for improving high-temperature or low-temperature performance of the battery.

Separator

In some embodiments, the battery cell further includes a separator. The type of the separator is not particularly limited in the present disclosure, and any well-known porous separator with good chemical stability and mechanical stability may be used.

In some embodiments, the material of the separator may be selected from at least one of glass fiber, nonwoven fabric, polyethylene, polypropylene, and polyvinylidene fluoride. The separator may be a single-layer film or a multi-layer composite film, without particular limitation. When the separator is a multi-layer composite film, the materials of the various layers may be the same or different, without particular limitation.

In some embodiments, the positive electrode sheet, the negative electrode sheet, and the separator may be made into an electrode assembly by a winding process or a stacking process.

In some embodiments, the battery cell may include an outer package. The outer package may be used to encapsulate the above electrode assembly and electrolyte.

In some embodiments, the outer package of the battery cell may be a hard shell, such as a hard plastic shell, an aluminum shell, a steel shell, or the like. The outer package of the battery cell may alternatively be a soft pack, such as a pouch-type soft pack. The material of the soft pack may be plastic, such as polypropylene, polybutylene terephthalate, or polybutylene succinate.

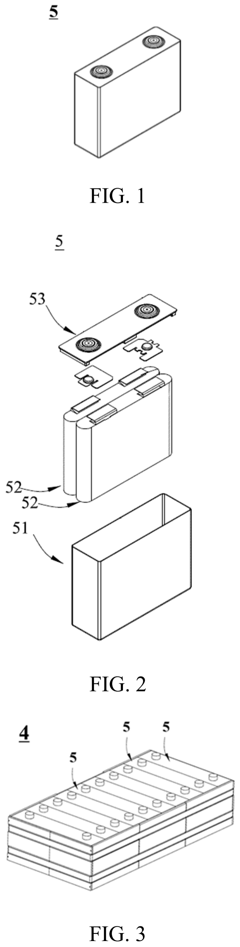

The shape of the battery cell is not particularly limited in the present disclosure and may be cylindrical, square, or any other shape. For example, FIG. 1 is a square-structured battery cell 5 as an example.

In some embodiments, referring to FIG. 2, the outer package may include a housing 51 and a top cover assembly 53. The housing 51 may include a bottom plate and a side plate connected to the bottom plate, and the bottom plate and the side plate enclose an accommodating cavity. The housing 51 has an opening communicating with the accommodating cavity, and the top cover assembly 53 can cover the opening to close the accommodating cavity. The positive electrode sheet, the negative electrode sheet, and the separator may form an electrode assembly 52 by a winding process or a stacking process. The electrode assembly 52 is encapsulated in the accommodating cavity. The electrolytic solution is infiltrated in the electrode assembly 52. The number of electrode assemblies 52 included in the battery cell 5 may be one or more, and those skilled in the art may select according to specific actual needs.

In some embodiments, battery cells may be assembled into a battery module, and the number of battery cells included in the battery module may be one or more, and the specific number may be selected by those skilled in the art according to the application and capacity of the battery module.

FIG. 3 is a battery module 4 as an example. Referring to FIG. 3, in the battery module 4, a plurality of battery cells 5 may be sequentially arranged along a length direction of the battery module 4. Certainly, they may also be arranged in any manner. The plurality of battery cells 5 may further be fixed by fasteners.

Optionally, the battery module 4 may further include a shell having an accommodating space, and the plurality of battery cells 5 are accommodated in the accommodating space.

In some embodiments, the above battery modules may also be assembled into a battery pack, and the number of battery modules included in the battery pack may be one or more, and the specific number may be selected by those skilled in the art according to the application and capacity of the battery pack.

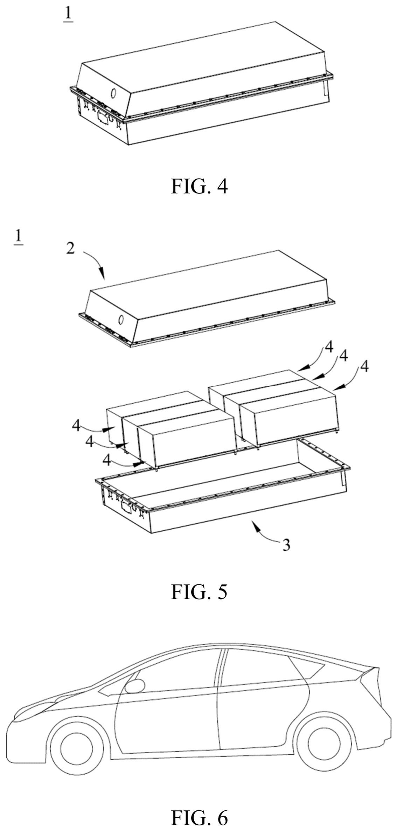

FIG. 4 and FIG. 5 are a battery pack 1 as an example. Referring to FIG. 4 and FIG. 5, the battery pack 1 may include a battery box and a plurality of battery modules 4 disposed in the battery box. The battery box includes an upper box body 2 and a lower box body 3, the upper box body 2 can cover the lower box body 3 and form a closed space for receiving the battery modules 4. The plurality of battery modules 4 may be arranged in the battery box in any manner.

In addition, a second aspect of the present disclosure provides an electric device including the secondary battery provided in the present disclosure. The secondary battery may be used as a power source of the electric device or as an energy storage unit of the electric device. The electric device may include a mobile device (for example, a mobile phone, or a laptop), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

The battery cell, battery module, or battery pack may be selected for the electric device according to its use requirements.

FIG. 6 is an electric device as an example. The electric device is a battery electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet, a laptop, or the like. The device generally requires thinness and lightness and may use a battery cell as a power source.

## Examples

Hereinafter, examples of the present disclosure will be described. The examples described below are exemplary and are merely for explaining the present disclosure, and should not be construed as limiting the present disclosure. Specific techniques or conditions are not indicated in the examples, the techniques or conditions described in the literature in the art or the product specification are followed. Reagents or instruments used without indicating the manufacturer are conventional products that can be purchased commercially.

### Example 1

Preparation of positive electrode active material

Step (1): Nickel sulfate, cobalt sulfate, and manganese sulfate were mixed in a molar ratio of Ni, Co, and Mn of 93:6:1 to obtain a mixed solution. The mixed solution, sodium carbonate, and ammonia water were added to a reactor, the pH of the mixed solution in the reactor was controlled at 12, the temperature was controlled at 61°C, and a coprecipitation reaction was performed so that precursor particles grew to a target Dv50 = 10 $\mu$m. After the reaction was completed, washing and drying were performed to obtain an ultra-high nickel ternary material precursor ($Ni_{0.93}Co_{0.06}Mn_{0.01}(OH)_2$).

Step (2): The above precursor and $Li(OH)_2$ were mixed in a molar ratio of 1:1.05, then $WO_3$ and $ZrO_2$ were added, and the resulting mixture was mixed so that a molar ratio of Li, W, and Zr was 1:0.003:0.005, and then the mixed powder was added to a sintering furnace and held at 720°C for 14 h, then cooled to room temperature at a cooling rate of 5°C/min to obtain a lithium transition metal oxide ($Li(Ni_{0.93}Co_{0.06}Mn_{0.01})_{0.992}W_{0.003}Zr_{0.005}O_2$).

Step (3): The lithium transition metal oxide obtained in step (2) was crushed and then fully mixed with lithium aluminum titanium phosphate ($LiAl_{0.5}Ti_{1.5}(PO_4)_3$) so that a molar ratio of element lithium to element phosphorus was 1:0.001, the mixed powder was added to a sintering furnace and sintered at 600°C for 6.5 h, and then cooled to room temperature at a rate of 5°C/min.

Step (4): 300 g of the powder obtained in step (3) was added to 300 mL of deionized water and stirred for 5 min, then filtered to obtain solid powder, and then dried at 60°C with air blowing.

Step (5): The powder obtained in step (4) was added to a sintering furnace and fully mixed with $Al_2O_3$ and $Y_2O_3$ so that a molar ratio of element lithium, element aluminum, and yttrium element was 1:0.009:0.007, the mixed powder was sintered at 300°C for 8 h, and cooled to room temperature at a rate of 1.5°C/min to obtain the positive electrode active material of Example 1.

Preparation of secondary battery

(a) Preparation of positive electrode sheet

The positive electrode active material prepared above, conductive agent acetylene black, and binder polyvinylidene fluoride (PVDF) were dissolved in solvent N-methylpyrrolidone (NMP) in a mass ratio of 98:0.5:1.5, the mixture was fully stirred and mixed uniformly to prepare a positive electrode slurry; then the positive electrode slurry was uniformly applied on aluminum foil, dried, and cold-pressed to obtain a positive electrode sheet.

(b) Preparation of negative electrode sheet

Artificial graphite, hard carbon, conductive agent acetylene black, binder styrene-butadiene rubber (SBR), and thickener sodium carboxymethyl cellulose (CMC) were added to deionized water solvent in a mass ratio of 90:5:2:2:1, the mixture was fully stirred and mixed uniformly, coated on both sides of copper foil, dried, and cold-pressed to obtain a negative electrode sheet.

(c) Preparation of electrolytic solution

The electrolytic solution was a mixture of ethylene carbonate (EC), diethyl carbonate (DEC), and dimethyl carbonate (DMC), where a volume ratio of EC, DEC, and DMC was 1:1:1. Then $LiPF_6$ was dissolved in the above organic solvent, where a concentration of $LiPF_6$ was 1 mol/L.

(d) Preparation of battery

A separator (a polyethylene film with a thickness of 13 $\mu$m), the negative electrode sheet, and the positive electrode sheet were stacked in the order of "separator-negative electrode sheet-separator-positive electrode sheet," compacted and shaped, packaged with an aluminum-plastic bag, injected with the electrolytic solution, hermetically encapsulated, and then formed to prepare a pouch battery.

Measurement of positive electrode active material

(a) Measurement of TG and DTG

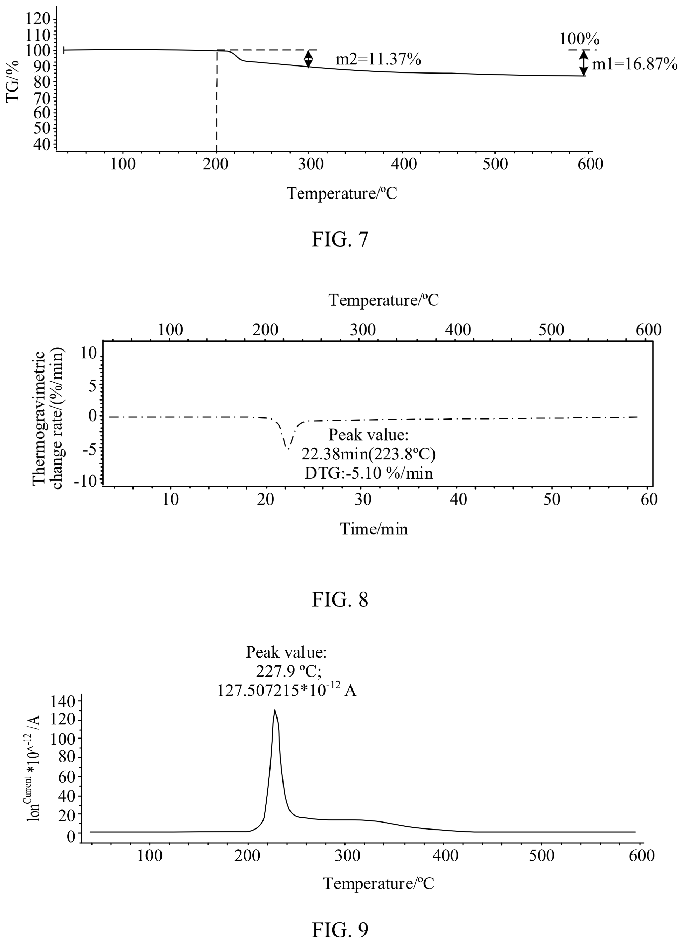

Using a thermogravimetric mass spectrometer TGA-MS (SDT650+Discovery MS), the positive electrode active material prepared in Example 1 was heated from 0°C to 600°C at a heating rate of 10°C/min to obtain a thermogravimetric analysis curve (TG curve), as shown in FIG. 7.
As can be seen from FIG. 7, the main part of total weight loss occurs in the temperature range of 220°C to 360°C, m1 during heating from 0°C to 600°C was 16.87%, and m2 from 220°C to 360°C was 11.37%. m2/m1 = 67.40%.
Then, each point on the TG curve was first-order differentiated with respect to the time coordinate to obtain a differential thermogravimetric curve (DTG curve), as shown in FIG. 8. In FIG. 8, a peak appears in the temperature range of 220°C to 240°C, and the peak value of the thermogravimetric change rate was -5.1 %/min.

(b) Measurement of oxygen mass spectrum

Using a thermogravimetric mass spectrometer TGA-MS (SDT 650+Discovery MS), TGA was synchronously tested for mass spectrometry to obtain FIG. 9.
As shown in FIG. 9, the abscissa is the test temperature, and the ordinate is the ion current intensity (Ion$^{Current}$). The tested gas is oxygen in the gas released from the positive electrode active material during the thermogravimetric test. A larger ion current intensity value indicates more oxygen released from the positive electrode active material at the current temperature, indicating more severe decomposition of the positive electrode active material at the current temperature and poorer thermal stability. A smaller ion current intensity value indicates less oxygen released from the positive electrode active material at the current temperature, indicating better thermal stability of the positive electrode active material. It can be seen from FIG. 9 that a peak value appears in the temperature range of 220°C-360°C, and the corresponding ion current intensity (Ion$^{Current}$) value is $127.5\times10^{-12}$ A.

Test for battery performance

(a) Test for gas generation performance

The obtained pouch battery was charged to 4.25 V at 0.33C, then placed in a 70°C temperature environment and stored for 50 days. Then the volume of gas was tested as the gas generation amount of the pouch battery, recorded as Q, and the current capacity was measured, recorded as D50. The gas generation per unit capacity at 50 days was Q/D50.

(b) Test for cycling performance at 25°C

In a 25°C constant temperature environment, the battery was charged to 4.25 V at 0.33C, then constant-voltage charged at 4.25 V until the current was ≤ 0.05 mA, rested for 5 min, and then discharged to 2.8 V at 0.33C to obtain capacity D1. The previous process was repeated, and after 100 cycles, the capacity D100 of the pouch battery was recorded.

$$100\text{-cycle capacity retention rate} = D100/D1.$$

(c) Test for Storage Performance at 60°C

The pouch battery was charged to 4.25 V at 0.33C, then constant-voltage charged at 4.25 V until the current was ≤ 0.05 mA, rested for 5 min, and then discharged to 2.8 V at 0.33C, with capacity recorded as D0. Then it was charged to 4.25 V at 0.33C, stored in a 60°C temperature environment for 30 days, and discharged to 2.8 V at 0.33C, with capacity recorded as D30.

$$60°C \text{ 30-day capacity retention rate} = D30/D0.$$

**Example 2**

A positive electrode active material was prepared in a similar manner to Example 1, except that:
In step (2), $Ta_2O_5$ was used instead of $WO_3$, and $Sb_2O_3$ was used instead of $ZrO_2$, and the molar ratio of Li, Ta, and Sb was 1:0.01:0.006.
Except for the above, a pouch battery was prepared and tested in the same manner as in Example 1. The results are shown in Table 2 below.

**Example 3**

A positive electrode active material was prepared in a similar manner to Example 1, except that:
In step (2), after adding $WO_3$ and $ZrO_2$, the molar ratio of Li, W, and Zr was 1:0.005:0.005.
Except for the above, a pouch battery was prepared and tested in the same manner as in Example 1. The results are shown in Table 2 below.

**Example 4**

A positive electrode active material was prepared in a similar manner to Example 1, except that:
In step (2), $Ta_2O_5$ was used instead of $WO_3$, and after adding $Ta_2O_5$ and $ZrO_2$, the molar ratio of Li, Ta, and Zr was 1:0.01:0.005.
Except for the above, a pouch battery was prepared and tested in the same manner as in Example 1. The results are shown in Table 2 below.

**Example 5**

A positive electrode active material was prepared in a similar manner to Example 1, except that:
In step (5), $Al_2O_3$ and $Y_2O_3$ were not added during the sintering process.
Except for the above, a pouch battery was prepared and tested in the same manner as in Example 1. The results are shown in Table 2 below.

**Example 6**

A positive electrode active material was prepared in a similar manner to Example 1, except that:
In step (1), nickel sulfate, cobalt sulfate, and manganese sulfate were mixed in a molar ratio of Ni, Co, and Mn of 90:5:5 to obtain a mixed solution.
Except for the above, a pouch battery was prepared and tested in the same manner as in Example 1. The results are shown in Table 2 below.

**Example 7**

A positive electrode active material was prepared in a similar manner to Example 1, except that:
In step (1), nickel sulfate, cobalt sulfate, and manganese sulfate were mixed in a molar ratio of Ni, Co, and Al of 90:5:5 to obtain a mixed solution.

Except for the above, a pouch battery was prepared and tested in the same manner as in Example 1. The results are shown in Table 2 below.

**Comparative Example 1**

A positive electrode active material was prepared in a similar manner to Example 1, except that:
In step (3), lithium aluminum titanium phosphate ($LiAl_{0.5}Ti_{1.5}(PO_4)_3$) was not added.

Except for the above, a pouch battery was prepared and tested in the same manner as in Example 1. The results are shown in Table 2 below.

**Table 1**

| No. | Chemical formula of matrix | Molar ratio of Li in matrix to P in coating layer | Composition of coating layer |
|---|---|---|---|
| Example 1 | $Li(Ni_{0.93}Co_{0.06}Mn_{0.01})_{0.992}W_{0.003}Zr_{0.005}O_2$ | 1:0.001 | $LiAl_{0.5}Ti_{1.5}(PO_4)_3$ and $Al_{18}Y_{14}O_{48}$ |
| Example 2 | $Li(Ni_{0.93}Co_{0.06}Mn_{0.01})_{0.984}Ta_{0.01}Sb_{0.006}O_2$ | 1:0.001 | $LiAl_{0.5}Ti_{1.5}(PO_4)_3$ and $Al_{18}Y_{14}O_{48}$ |
| Example 3 | $Li(Ni_{0.93}Co_{0.06}Mn_{0.01})_{0.99}W_{0.005}Zr_{0.005}O_2$ | 1:0.001 | $LiAl_{0.5}Ti_{1.5}(PO_4)_3$ and $Al_{18}Y_{14}O_{48}$ |
| Example 4 | $Li(Ni_{0.93}Co_{0.06}Mn_{0.01})_{0.985}Ta_{0.01}Zr_{0.005}O_2$ | 1:0.001 | $LiAl_{0.5}Ti_{1.5}(PO_4)_3$ and $Al_{18}Y_{14}O_{48}$ |
| Example 5 | $Li(Ni_{0.93}Co_{0.06}Mn_{0.01})_{0.992}W_{0.003}Zr_{0.005}O_2$ | 1:0.001 | $LiAl_{0.5}Ti_{1.5}(PO_4)_3$ |
| Example 6 | $Li(Ni_{0.9}CO_{0.05}Mn_{0.05})_{0.992}W_{0.003}Zr_{0.005}O_2$ | 1:0.001 | $LiAl_{0.5}Ti_{1.5}(PO_4)_3$ and $Al_{18}Y_{14}O_{48}$ |
| Example 7 | $Li(Ni_{0.9}Co_{0.05}Al_{0.05})_{0.992}W_{0.003}Zr_{0.005}O_2$ | 1:0.001 | $LiAl_{0.5}Ti_{1.5}(PO_4)_3$ and $Al_{18}Y_{14}O_{48}$ |
| Comparative Example 1 | $Li(Ni_{0.93}Co_{0.06}Mn_{0.01})_{0.992}W_{0.003}Zr_{0.005}O_2$ | / | $Al_{18}Y_{14}O_{48}$ |

**Table 2**

| No. | Performance of positive electrode active material | | | | | Battery performance | | |
|---|---|---|---|---|---|---|---|---|
| | Peak value of thermogravimetric change rate (%/min) | m1(%) | m2(%) | m2/m1( %) | Peak value of ion current intensity (A) | Gas generation (mL/Ah) | 100-cycle capacity retention (%) | 30-day storage capacity retention (%) |
| Example 1 | -5.1 %/min | 16.87 | 11.37 | 67.40 | $127.5\times10^{-12}$ | 3.9 | 96.6 | 95.8 |
| Example 2 | -4.4%/min | 15.36 | 8.31 | 54.10 | $78.8\times10^{-12}$ | 3.3 | 97.5 | 96.3 |
| Example 3 | -4.9%/min | 16.27 | 9.71 | 59.68 | $114.5\times10^{-12}$ | 3.7 | 96.8 | 96.0 |
| Example 4 | -4.6%/min | 15.65 | 9.15 | 58.47 | $1217\times10^{-12}$ | 3.5 | 97.1 | 95.9 |
| Example 5 | -6.1%/min | 17.88 | 14.08 | 78.75 | $474.2\times10^{-12}$ | 4.1 | 95.3 | 95.0 |
| Example 6 | -4.4%/min | 14.66 | 8.16 | 55.66 | $81.1\times10^{-12}$ | 3.6 | 96.7 | 96.1 |
| Example 7 | -5.6%/min | 17.31 | 11.94 | 68.98 | $283.5\times10^{-12}$ | 4.0 | 96.8 | 95.9 |
| Comparative Example 1 | -7%/min | 18.62 | 15.31 | 82.22 | $649.1\times10^{-12}$ | 5.3 | 94.9 | 94.2 |

From the data in the above table 1 and table 2: in examples 1 to 7, the absolute value of the peak value of the thermogravimetric change rate of the positive electrode active material is less than 7%/min, the positive electrode active material has improved thermal stability and less gas generation, and the batteries of examples 1 to 7 have improved storage performance and cycling performance.

**Example 8**

A positive electrode active material was prepared in a similar manner to Example 1, except that:
In step (2), $WO_3$, $ZrO_2$, and $Ta_2O_5$ were added, and the molar ratio of Li, W, Ta, and Zr was 1:0.004:0.005:0.002.
In step (3), the lithium transition metal oxide obtained in step (2) was crushed and mixed with lithium aluminum titanium phosphate ($LiAl_{0.5}Ti_{1.5}(PO_4)_3$) so that the molar ratio of Li to P was 1:0.004.
In step (5), $Al_2O_3$ and $Y_2O_3$ were added during the sintering process so that the molar ratio of Li, Al, and Y was 1:0.01:0.01.
Except for the above, a pouch battery was prepared and tested in the same manner as in Example 1. The results are shown in Table 4 below.

**Example 9**

A positive electrode active material was prepared in a similar manner to Example 1, except that:
In step (2), $Ta_2O_5$ was used instead of $WO_3$, $Sb_2O_3$ was used instead of $ZrO_2$, and after $ZrO_2$ and $Ta_2O_5$ were added, the molar ratio of Li, Ta, and Zr was 1:0.008:0.006.
In step (3), the lithium transition metal oxide obtained in step (2) was crushed and mixed with lithium aluminum titanium phosphate ($LiAl_{0.5}Ti_{1.5}(PO_4)_3$) so that the molar ratio of Li to P was 1:0.003.
In step (5), $Al_2O_3$ and $Y_2O_3$ were added during the sintering process so that the molar ratio of Li, Al, and Y was 1:0.01:0.008.
Except for the above, a pouch battery was prepared and tested in the same manner as in Example 1. The results are shown in Table 4 below.

**Example 10**

A positive electrode active material was prepared in a similar manner to Example 1, except that:
In step (2), $WO_3$ and $ZrO_2$ were added so that the molar ratio of Li, W, and Zr was 1:0.001:0.003.
In step (5), $Al_2O_3$ and $Y_2O_3$ were added during the sintering process so that the molar ratio of Li, Al, and Y was 1:0.005:0.006.
Except for the above, a pouch battery was prepared and tested in the same manner as in Example 1. The results are shown in Table 4 below.

**Example 11**

A positive electrode active material was prepared in a similar manner to Example 1, except that:
In step (2), $WO_3$ and $ZrO_2$ were added so that the molar ratio of Li, W, and Zr was 1:0.001:0.001.
In step (5), $Al_2O_3$ and $Y_2O_3$ were added during the sintering process so that the molar ratio of Li, Al, and Y was 1:0.005:0.005.
Except for the above, a pouch battery was prepared and tested in the same manner as in Example 1. The results are shown in Table 4 below.

**Table 3**

| No. | Chemical formula of matrix | Molar ratio of Li in matrix to P in coating layer | Composition of coating layer |
|---|---|---|---|
| Example 8 | $Li(Ni_{0.93}Co_{0.06}Mn_{0.01})_{0.989}W_{0.004}Zr_{0.002}Ta_{0.005}O_2$ | 1:0.004 | $LiAl_{0.5}Ti_{1.5}(PO_4)$ and $AlYO_3$ |
| Example 9 | $Li(Ni_{0.93}Co_{0.06}Mn_{0.01})_{0.986}Ta_{0.008}Zr_{0.006}O_2$ | 1:0.003 | $LiAl_{0.5}Ti_{1.5}(PO_4)$ and $Al_{10}Y_8O_{27}$ |
| Example 10 | $Li(Ni_{0.93}Co_{0.06}Mn_{0.01})_{0.996}W_{0.001}Zr_{0.003}O_2$ | 1:0.001 | $LiAl_{0.5}Ti_{1.5}(PO_4)$ and $Al_{18}Y_{14}O_{33}$ |

(continued)

| No. | Chemical formula of matrix | Molar ratio of Li in matrix to P in coating layer | Composition of coating layer |
|---|---|---|---|
| Example 11 | $Li(Ni_{0.93}Co_{0.06}Mn_{0.01})_{0.993}W_{0.001}Zr_{0.001}O_2$ | 1:0.001 | $LiAl_{0.5}Ti_{1.5}(PO_4)$ and $AlYO_3$ |

**Table 4**

| No. | Performance of positive electrode active material | | | | | Battery performance | | |
|---|---|---|---|---|---|---|---|---|
| | Peak value of thermogravimetric change rate (%/min) | m1(%) | m2(%) | m2/m1(%) | Peak value of ion current intensity (A) | Gas generation (mL/Ah) | 100-cycle capacity retention (%) | 30-day storage capacity retention (%) |
| Example 8 | -3.2%/min | 14.11 | 5.71 | 40.47 | $43.5\times10^{-12}$ | 2.2 | 97.8 | 96.7 |
| Example 9 | -4.1 %/min | 14.87 | 7.35 | 49.43 | $54.8\times10^{-12}$ | 2.8 | 97.1 | 96.2 |
| Example 10 | -4.8%/min | 15.89 | 11.18 | 70.36 | $101.5\times10^{-12}$ | 3.8 | 96.5 | 95.8 |
| Example 11 | -4.9%/min | 16.01 | 11.96 | 74.70 | $126.4\times10^{-12}$ | 4.0 | 96.3 | 95.6 |

From the data in the above table 1 and table 4: compared with example 5, in examples 8 to 11, m2/m1 of the positive electrode active material is in the range of 40%-75%, the thermal stability of the positive electrode active material is further improved, and gas generation is further reduced, and the batteries of examples 8 to 11 have further improved storage performance and cycling performance.

It should be noted that the present disclosure is not limited to the above embodiments. The above embodiments are merely examples, and embodiments having substantially the same configuration as the technical idea and exhibiting the same effects within the technical scope of the present disclosure are all included in the technical scope of the present disclosure.

**Claims**

1.  A secondary battery, comprising:

    a positive electrode sheet, a negative electrode sheet, a separator disposed between the positive electrode sheet and the negative electrode sheet, and an electrolytic solution comprising an organic solvent and a lithium salt; wherein
    the positive electrode sheet comprises a positive electrode current collector and a positive electrode film layer disposed on at least one surface of the positive electrode current collector, wherein the positive electrode film layer comprises a positive electrode active material;
    the positive electrode active material comprises a lithium transition metal oxide, the lithium transition metal oxide comprises element nickel and element cobalt, and comprises at least one of element manganese and element aluminum; and in the lithium transition metal oxide, a molar content of the element nickel is 85mol% or higher based on all metal elements except lithium; and
    in a differential thermogravimetric curve obtained by heating the positive electrode active material at a heating rate of 10°C/min, an absolute value of a peak value of a thermogravimetric change rate is less than 7%/min.

2.  The secondary battery according to claim 1, wherein the molar content of the element nickel is 90mol% or higher based on all metal elements except lithium.

3. The secondary battery according to claim 1 or 2, wherein the absolute value of the peak value of the thermogravimetric change rate is less than or equal to 6.1%/min.

4. The secondary battery according to any one of claims 1 to 3, wherein the absolute value of the peak value of the thermogravimetric change rate is less than or equal to 5.6%/min.

5. The secondary battery according to any one of claims 1 to 4, wherein in thermogravimetric analysis, a total weight loss of the positive electrode active material during heating from 0°C to 600°C, which accounts for a percentage of a weight of the positive electrode active material, is defined as m1, and a weight loss during heating from 220°C to 360°C, which accounts for a percentage of a weight of the positive electrode active material, is defined as m2, wherein m1 and m2 satisfy the following relationship: $40\% \leq m2/m1 \leq 75\%$.

6. The secondary battery according to claim 5, wherein m2 is 0.5% to 12%.

7. The secondary battery according to claim 5 or 6, wherein m1 is 1% to 18%.

8. The secondary battery according to any one of claims 1 to 7, wherein in thermogravimetric analysis, a weight loss rate of the positive electrode active material at 600°C is greater than 1% and less than 18%.

9. The secondary battery according to any one of claims 1 to 8, wherein in thermogravimetric analysis, a weight loss rate of the positive electrode active material at 600°C is 10% to 18%.

10. The secondary battery according to any one of claims 1 to 9, wherein in thermogravimetric analysis, a weight loss rate of the positive electrode active material at 300°C is 10% to 12%.

11. The secondary battery according to any one of claims 1 to 10, wherein in thermogravimetric analysis, a weight loss rate of the positive electrode active material at 200°C is 0.01% to 0.5%.

12. The secondary battery according to any one of claims 1 to 11, wherein the differential thermogravimetric curve is obtained by testing under a nitrogen atmosphere from 0°C to 600°C.

13. The secondary battery according to any one of claims 1 to 12, wherein in the differential thermogravimetric curve, the peak value of the thermogravimetric change rate appears in the range of 200°C to 280°C.

14. The secondary battery according to any one of claims 1 to 13, wherein in the differential thermogravimetric curve, the peak value of the thermogravimetric change rate appears in the range of 220°C to 240°C.

15. The secondary battery according to any one of claims 1 to 14, wherein in the differential thermogravimetric curve, a peak area of a peak of the thermogravimetric change rate is 12.0% to 17.0%.

16. The secondary battery according to any one of claims 1 to 15, wherein in the differential thermogravimetric curve, a full width at half maximum of the peak of the thermogravimetric change rate is 5°C to 25°C.

17. The secondary battery according to any one of claims 1 to 16, wherein for oxygen released from the positive electrode active material during thermogravimetric analysis, in a mass spectrum curve obtained by mass spectrometry, a peak value of a mass spectrum peak is less than or equal to $5 \times 10^{-10}$ A.

18. The secondary battery according to claim 17, wherein in the mass spectrum curve, the peak value of the mass spectrum peak appears in the range of 200°C to 280°C.

19. The secondary battery according to claim 17 or 18, wherein in the mass spectrum curve, the peak value of the mass spectrum peak appears in the range of 220°C to 240°C.

20. The secondary battery according to any one of claims 17 to 19, wherein an area of the mass spectrum peak is $1.2 \times 10^{-9}$ A·°C to $50 \times 10^{-9}$ A·°C.

21. The secondary battery according to any one of claims 17 to 20, wherein a full width at half maximum of the mass spectrum peak is 10°C to 20°C.

22. The secondary battery according to any one of claims 1 to 21, wherein in an X-ray diffraction pattern of the positive electrode active material, a ratio of a peak intensity of the 003 plane to a peak intensity of the 104 plane is 1.2-1.7.

23. The secondary battery according to any one of claims 1 to 22, wherein the lithium transition metal oxide further comprises a doping element, and the doping element comprises at least one of Mg, Na, Zr, Y, Ca, W, Nb, Ta, Sr, and Ti.

24. The secondary battery according to claim 23, wherein a content of the doping element is 3000 ppm or less based on the lithium transition metal oxide.

25. The secondary battery according to any one of claims 1 to 24, wherein the lithium transition metal oxide comprises $Li_aNi_bCo_cMn_dM1_{(1-b-c-d)}O_n$ and/or $Li_eNi_fCo_gAl_hM2_{(1-f-g-h)}O_n$; wherein

    in $Li_aNi_bCo_cMn_dM1_{(1-b-c-d)}O_n$, $0.5 \leq a \leq 1.2$, $0.85 \leq b \leq 0.99$, $0 \leq c \leq 0.1$, $0 \leq d \leq 0.05$, $1.9 \leq n \leq 2.2$, and $M1$ comprises one or more combinations of Mg, Na, Zr, Y, Al, Ca, W, Nb, Ta, Sr, and Ti; and
    in $Li_eNi_fCo_gAl_hM2_{(1-f-g-h)}O_n$, $0.5 \leq e \leq 1.2$, $0.85 \leq f \leq 0.99$, $0 \leq g \leq 0.1$, $0 \leq h \leq 0.05$, $1.9 \leq n \leq 2.2$, and $M2$ comprises one or more combinations of Mg, Na, Zr, Y, Ca, W, Nb, Ta, Sr, and Ti.

26. The secondary battery according to any one of claims 1 to 25, wherein the positive electrode active material satisfies at least one of the following conditions:

    (1) a volume average particle size Dv50 of the positive electrode active material is 8.5 $\mu$m to 12 $\mu$m;
    (2) a specific surface area BET of the positive electrode active material is 0.35 $m^2$/g to 0.65 $m^2$/g;
    (3) a powder compacted density of the positive electrode active material under a pressure of 3000 N is 3.0 $g/cm^3$ to 3.5 $g/cm^3$;
    (4) a tap density of the positive electrode active material is 2.9 $g/cm^3$ to 3.5 $g/cm^3$; and
    (5) a delithiated gram capacity of the positive electrode active material is 210 mAh/g to 225 mAh/g.

27. The secondary battery according to any one of claims 1 to 26, wherein the positive electrode active material comprises a matrix and a coating layer disposed on at least part of a surface of the matrix, and the matrix comprises the lithium transition metal oxide.

28. The secondary battery according to claim 27, wherein the coating layer comprises an outer layer and an inner layer disposed between the outer layer and the matrix; wherein

    the inner layer comprises at least one element of P, Al, Ca, and Ti; and
    the outer layer comprises at least one element of Y and Al.

29. The secondary battery according to claim 28, wherein the inner layer comprises element P, and the outer layer comprises element Y and element Al.

30. The secondary battery according to claim 28 or 29, wherein in the positive electrode active material, a molar ratio of element lithium to element phosphorus is 1:0.001-0.004.

31. An electric device, comprising the secondary battery according to any one of claims 1 to 30.

32. A positive electrode active material, comprising a lithium transition metal oxide, wherein the lithium transition metal oxide comprises element nickel and element cobalt, and comprises at least one of element manganese and element aluminum;

    in the lithium transition metal oxide, a molar content of the element nickel is 85mol% or higher based on all metal elements except lithium; and
    in a differential thermogravimetric curve obtained by heating the positive electrode active material at a heating rate of 10°C/min, an absolute value of a peak value of a thermogravimetric change rate is less than 7%/min.

33. The positive electrode active material according to claim 32, wherein the molar content of the element nickel is 90mol% or higher based on all metal elements except lithium.

34. The positive electrode active material according to claim 32 or 33, wherein the absolute value of the peak value of the thermogravimetric change rate is less than or equal to 6.1%/min.

35. The positive electrode active material according to any one of claims 32 to 34, wherein the absolute value of the peak value of the thermogravimetric change rate is less than or equal to 5.6%/min.

36. The positive electrode active material according to any one of claims 32 to 35, wherein in thermogravimetric analysis, a total weight loss of the positive electrode active material during heating from 0°C to 600°C, which accounts for a percentage of a weight of the positive electrode active material, is defined as m1, and a weight loss during heating from 220°C to 360°C, which accounts for a percentage of a weight of the positive electrode active material, is defined as m2, wherein m1 and m2 satisfy the following relationship: $40\% \leq m2/m1 \leq 75\%$.

37. The positive electrode active material according to claim 36, wherein m2 is 0.5% to 12%.

38. The positive electrode active material according to claim 36 or 37, wherein m1 is 1% to 18%.

39. The positive electrode active material according to any one of claims 32 to 38, wherein in thermogravimetric analysis, a weight loss rate of the positive electrode active material at 600°C is greater than 1% and less than 18%.

40. The positive electrode active material according to any one of claims 32 to 39, wherein in thermogravimetric analysis, a weight loss rate of the positive electrode active material at 300°C is 10% to 12%.

41. The positive electrode active material according to any one of claims 32 to 40, wherein in thermogravimetric analysis, a weight loss rate of the positive electrode active material at 200°C is 0.01% to 0.5%.

FIG. 1

FIG. 2

FIG. 3

1

FIG. 4

1

2

4 4 4

4 4 4

3

FIG. 5

FIG. 6

FIG. 7

FIG. 8

FIG. 9

## INTERNATIONAL SEARCH REPORT

| | International application No. |
| --- | --- |
| | **PCT/CN2024/115806** |

| A. | CLASSIFICATION OF SUBJECT MATTER |
| --- | --- |

H01M4/505(2010.01)i；H01M4/525(2010.01)i；H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC：H01M4，H01M10

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, ISI_Web of Science: 电池, 正极, 活性材料, 镍, 热重, 失重, 磷酸铝锂钛, 包覆, battery, anode, active material, nickel, thermal weight loss, LATP, coat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118431459 A (CONTEMPORARY AMPEREX TECHNOLOGY CO., LTD.) 02 August 2024 (2024-08-02)<br>the claims | 1-41 |
| Y | CN 117558885 A (YANGTZE DELTA REGION INSTITUTE OF UNIVERSITY OF ELECTRONIC SCIENCE AND TECHNOLOGY OF CHINA, HUZHOU) 13 February 2024 (2024-02-13)<br>description, paragraphs 2, 10-13, and 31 | 1-41 |
| Y | CN 102332579 A (DONGGUAN AMPEREX TECHNOLOGY LIMITED et al.) 25 January 2012 (2012-01-25)<br>description, paragraphs 10-16 and 26 | 1-41 |
| Y | CN 112349905 A (HUNAN SHANSHAN NEW ENERGY CO., LTD.) 09 February 2021 (2021-02-09)<br>description, paragraph 7 | 28-30 |
| A | JP 2018049684 A (SUMITOMO METAL MINING CO., LTD.) 29 March 2018 (2018-03-29)<br>entire description | 1-41 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 January 2025** | **24 January 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/115806** |

### C. DOCUMENTS CONSIDERED TO BE RELEVANT

| Category* | Citation of document, with indication, where appropriate, of the relevant passages | Relevant to claim No. |
| --- | --- | --- |
| A | US 2023166983 A1 (CONTEMPORARY AMPEREX TECHNOLOGY CO., LTD.) 01 June 2023 (2023-06-01) entire description | 1-41 |

Form PCT/ISA/210 (second sheet) (July 2022)

**INTERNATIONAL SEARCH REPORT**
Information on patent family members

International application No.

**PCT/CN2024/115806**

| Patent document cited in search report | | | Publication date (day/month/year) | Patent family member(s) | | | Publication date (day/month/year) |
|---|---|---|---|---|---|---|---|
| CN | 118431459 | A | 02 August 2024 | None | | | |
| CN | 117558885 | A | 13 February 2024 | None | | | |
| CN | 102332579 | A | 25 January 2012 | None | | | |
| CN | 112349905 | A | 09 February 2021 | None | | | |
| JP | 2018049684 | A | 29 March 2018 | JP | 6957846 | B2 | 02 November 2021 |
| US | 2023166983 | A1 | 01 June 2023 | WO | 2023092491 | A1 | 01 June 2023 |
| | | | | EP | 4231388 | A1 | 23 August 2023 |
| | | | | EP | 4231388 | A4 | 24 January 2024 |
| | | | | CN | 116802843 | A | 22 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202410657760